# EUROPEAN PATENT SPECIFICATION

(11) **EP 0 858 218 B1**
(45) Date of publication and mention of the grant of the patent: **02.04.2003**
(21) Application number: 98101610.8
(22) Date of filing: 30.01.1998
(51) Int. Cl.: H04N 5/65, H04N 5/64, G06F 1/16

(54) **Protective screen with incorporated loudspeakers for a monitor**
Schutzscheibe mit eingebauten Lautsprechern für Monitor
Ecran protecteur avec haut-parleurs intégrés pour un moniteur

(30) Priority: 05.02.1997 IT TO970025 U
(43) Date of publication of application: 12.08.1998
(73) Proprietor: Olivetti Tecnost S.p.A., 10015 Ivrea (TO) (IT)
(72) Inventor: Solero, Giorgio, 10155 Torino (IT)
(74) Representative: Casuccio, Carlo

(56) References cited:
- DE-A- 3 832 616
- US-A- 5 526 066
- US-A- 5 588 063

## Description

### Field of the invention

The present invention relates to a protective screen for a monitor, comprising a filter plate and fixing means for fixing the latter on the monitor.

### Background of the invention

Protective screens for monitors, especially those of electronic computers, are widely known today and are considered to be essential accessories for protection of the eyesight of the operator.

A protective screen is known from the European patent application published with No. EP-A-0781045, in the name of the applicant, wherein the fixing means comprise two lateral panels suitable for sliding with respect to each other so as to adapt to the dimensions of the monitor.

Loudspeakers are also becoming a widely requested accessory among the users of personal computers, in view of the fact that the computers have acquired "multimedia" capabilities and can handle both sounds and images.

There are computers with loudspeakers already fitted inside, or inside the monitor connected to them, as there are also so-called "multimedia kits" consisting of two loudspeakers and an appropriate electronic board intended for installation in the computer.

For a good stereo sound effect, the loudspeakers are generally arranged at the sides of the computer or its monitor.

A drawback with these separate loudspeakers is that they are cumbersome and often difficult to arrange stably and in the optimum position referred to above. DE-A-3 832 616 shows a foil which is attached to a TV receiver screen, and which forms a loudspeaker by using the piezo effect.

### Summary of the invention

The object of this invention is that of producing a single product combining the characteristics of the protective screen and of the loudspeakers, thereby enabling easy and convenient arrangement of the latter with respect to the monitor.

This object is obtained by the protective screen according to the invention as set out in claim 1.

### Brief description of the drawings

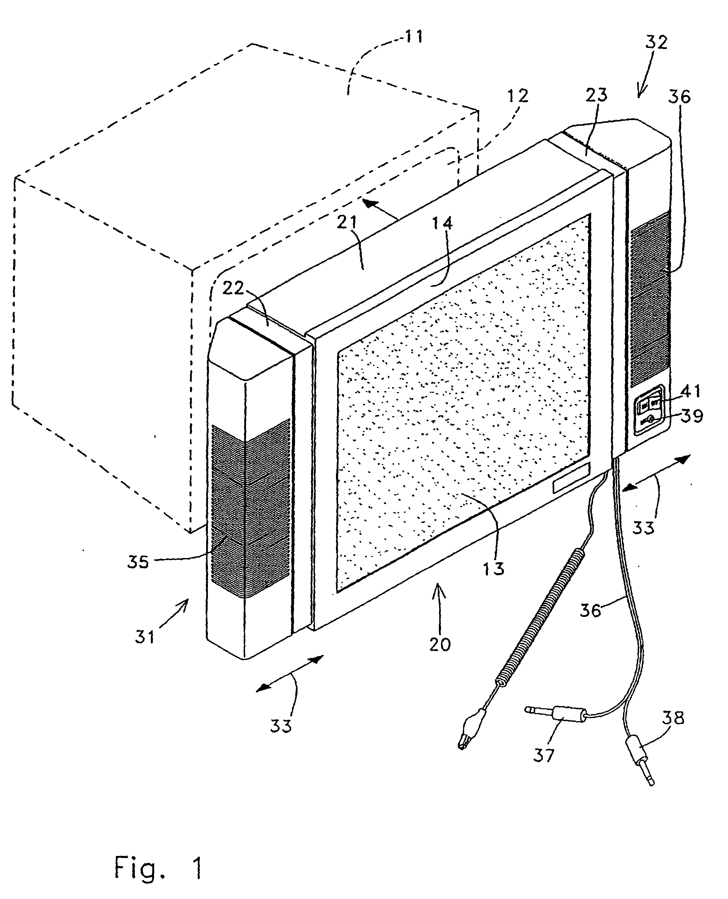

A clearer understanding of these and other characteristics of this inventionl will be gained from the following description, provided purely by way of an illustrative, non-restrictive example, and with reference to the attached Fig. 1, representing a perspective view of a protective screen according to this invention.

### Description of a preferred embodiment of the invention

It should be noted that the following description will use, for the corresponding parts, the same reference numerals as used in the EP-A-0781045.

With reference to Fig. 1, a protective screen 20 according to this invention is adapted to be removably assembled in front of a display screen 12 of a monitor 11, for example of a computer for personal use suitable for managing both sounds and images.

The protective screen 20 comprises a frame 14 and a filter plate 13 affixed to the frame 14 along the edges of the latter. The frame 14 is provided with a protrusion 21 adapted to be laid on an upper face of the monitor 11.

According to a characteristic of the present invention, the protective screen 20 comprises two lateral modules 31 and 32 arranged at opposite ends in relation to the filter plate 13 and to the frame 14. Each module 31, 32 comprises a panel 22, 23 respectively, and a loudspeaker 35, 36 respectively. The two panels 22 and 23 are coupled in a sliding arrangement with the frame 14 so as to be able to move with respect to the latter in the direction 33.

The construction details of the sliding connection between the panels 22 and 23 and the frame 14, and also their method of use, are amply described in EP-A-0781045, to which reference should be made for any details not described herein.

The loudspeakers 35 and 36 internally comprise speakers adapted to be electrically connected to a basic unit of the electronic computer (not shown in the drawings) associated with the monitor 11, via a cable 36 having a plug 37 suitable for insertion in a corresponding socket made in the basic unit of the electronic computer.

The cable 36 is also provided with a second plug 38 suitable for insertion in a corresponding socket of the basic unit and is connected, on the inside of the protective screen 20, to a socket 39 arranged on the front of the said screen 20 and adapted for receiving a microphone for the recording of voice messages.

Accordingly the electrical connection of the microphone to the basic unit is extremely convenient, being made in the zone in front of the operator and not, as is normally the case in the known art, in zones that are difficult to access, such as for example the rear of the basic unit.

The module 32 is provided with a switch 41 suitable for completely excluding the loudspeakers 35 and 36 from the basic unit to which they are connected, thereby immediately eliminating the sound emitted therefrom.

The volume of the sound emitted by the loud speakers 35 and 36 is adjustable, in a known way, through the program of the computer to which the screen is connected, or alternatively adjustment of the volume and of the other sound parameters, such as the tone of and balance between the two loudspeakers, may be made through one or more manually actuatable knobs, installable on either of the modules 31, 32.

A second plug may be provided on one of the modules 31, 32 for the connection of headphones, enabling the operator to listen to the sound emitted by the loudspeakers 35 and 36 without diffusing it in the surrounding area.

Assembly of the protective screen 20 on the monitor 11 automatically places the loudspeakers 35 and 36 to the sides of the latter, thereby effecting positioning that is both simple and optimum.

Furthermore, the protective screen 20 has proved to be very useful for the upgrading of personal computers and their monitors that do not incorporate loudspeakers.

It is understood that various changes and/or improvements may be made to the protective screen described up to now, without exiting from the scope of this invention.

## Claims

1. Protective screen (32) adapted to be removably assembled on a monitor (11), comprising a filter plate (13) and fixing means for fixing said filter plate on said monitor, **characterized by** the fact of incorporating at least one loudspeaker (35, 36).

2. Protective screen according to the claim 1, wherein said fixing means comprise two lateral panels adapted for locking on said monitor and for sliding with respect to each other so as to adapt to the dimensions of said monitor, **characterized by** the fact that said loudspeaker is assembled on one of said lateral panels.

3. Protective screen according to the claim 1, **characterized by** the fact that said loudspeaker is provided with a manually actuatable member for adjusting the volume of the sound emitted by said loudspeaker.

4. Protective screen according to the claim 2, **characterized by** the fact that said loudspeaker has a substantially parallelepiped shape extending substantially along the entire height of one of said lateral panels.

5. Protective screen according to the claim 1, **characterized by** the fact of comprising two modules each incorporating a loudspeaker and suitable for being arranged on two opposite sides of said monitor.

6. Protective screen according to the claim 1, wherein said monitor is associated with a basic unit of a personal computer, **characterized by** the fact that said protective screen is provided with connecting means suitable for electrically connecting said loudspeaker to said basic unit.

7. Protective screen according to the claim 6, **characterized by** the fact that it comprises a switch for totally excluding said loudspeaker from said basic unit and a socket, arranged on the front of said screen, in which a microphone may be inserted for the recording of voice messages.

## Patentansprüche

1. Schutzschirm (32) zur abnehmbaren Montage an einem Monitor (11), bestehend aus einer Filterplatte (13) und Befestigungsmitteln zur Befestigung der Filterplatte am Monitor, **gekennzeichnet durch** den Einbau wenigstens eines Lautsprechers (35, 36).

2. Schutzschirm nach Anspruch 1, bei dem die Befestigungsmittel zwei Seitenpaneele aufweisen, die am Monitor arretierbar und zur Anpassung an die Abmessungen des Monitors zueinander gleichbeweglich sind, **gekennzeichnet dadurch, daß** der Lautsprecher an einem der Seitenpaneele montiert ist.

3. Schutzschirm nach Anspruch 1, **dadurch gekennzeichnet, daß** der Lautsprecher mit einem manuell betätigbaren Element zum Einstellen der Lautstärke vom Lautsprecher abgegebenen Schalls ist.

4. Schutzschirm nach Anspruch 2, **dadurch gekennzeichnet, daß** der Lautsprecher in wesentlichen Quaderform hat und sich im wesentlichen über die gesamte Höhe eines der Seitenpaneele erstreckt.

5. Schutzschirm nach Anspruch 1, **gekennzeichnet durch** zwei Module, von denen jedes einen Lautsprecher enthält und die an zwei gegenüberliegenden Seiten des Monitors angeordnet sind.

6. Schutzschirm nach Anspruch 1, bei dem der Monitor der Basiseinheit eines PCs zugeordnet ist, **dadurch gekennzeichnet, daß** der Schutzschirm mit Anschlußmitteln zum elektrischen Anschließen des Lautsprechers an die Basiseinheit versehen ist.

7. Schutzschirm nach Anspruch 6, **dadurch gekennzeichnet, daß** er einen Schalter zum vollständigen Abschalten des Lautsprechers von der Basiseinheit und einen an der Vorderseite des Schirms angeordneten Sockel aufweist, in den ein Mikrophon zur Aufzeichnung von Sprachinformationen einsetzbar ist.

## Revendications

1. Ecran protecteur (32) adapté pour être monté de manière amovible sur un moniteur (11), comprenant une vitre filtrante (13) et des moyens de fixation destinés à fixer ladite vitre filtrante sur ledit moniteur, **caractérisé en ce qu'**il intègre au moins un haut-parleur (35, 36).

2. Ecran protecteur selon la revendication 1, dans lequel lesdits moyens de fixation comprennent deux panneaux latéraux adaptés pour se verrouiller sur ledit moniteur et pour coulisser l'un par rapport à l'autre de manière à s'adapter aux dimensions dudit moniteur, **caractérisé en ce que** ledit haut-parleur est monté sur un desdits panneaux latéraux.

3. Ecran protecteur selon la revendication 1, **caractérisé en ce que** ledit haut-parleur est pourvu d'un élément actionnable manuellement pour ajuster le volume du son émis par ledit haut-parleur.

4. Ecran protecteur selon la revendication 2, **caractérisé en ce que** ledit haut-parleur a une forme sensiblement en parallélépipède s'étendant sensiblement sur toute la hauteur de l'un desdits panneaux latéraux.

5. Ecran protecteur selon la revendication 1, **caractérisé en ce qu'**il comprend deux modules intégrant chacun un haut-parleur et adaptés pour être installés sur des côtés opposés dudit moniteur.

6. Ecran protecteur selon la revendication 1, dans lequel ledit moniteur est associé à une unité centrale d'un ordinateur personnel, **caractérisé en ce que** ledit écran protecteur est pourvu de moyens de connexion adaptés pour connecter électriquement ledit haut-parleur à ladite unité centrale.

7. Ecran protecteur selon la revendication 6, **caractérisé en ce qu'**il comprend un commutateur pour couper totalement ledit haut-parleur de ladite unité centrale et une prise, ménagée sur la façade dudit écran, dans laquelle un microphone peut être branché pour enregistrer des messages vocaux.
